# EUROPEAN PATENT SPECIFICATION

(11) **EP 0 398 892 B1**
(45) Date of publication and mention of the grant of the patent: **11.08.1993**
(21) Application number: 89900329.7
(22) Date of filing: 20.12.1988
(51) Int. Cl.: B29C 45/14, F16L 47/06, F16L 17/02

(54) **METHOD FOR MANUFACTURING A COMPOSITE SEAL, PIPE PART PROVIDED WITH SUCH A SEAL AND ALSO A PIPE CONNECTION COMPRISING SUCH A COMPOSITE SEAL**
VERFAHREN ZUM HERSTELLEN EINER ZUSAMMENGESETZTEN DICHTUNG, ROHRTEIL MIT EINER DERARTIGEN DICHTUNG UND AUCH ROHRVERBINDUNG MIT EINER DERARTIGEN ZUSAMMENGESETZTEN DICHTUNG
PROCEDE DE FABRICATION D'UN JOINT COMPOSITE, PARTIE DE TUYAU EQUIPEE D'UN TEL JOINT, AINSI QUE RACCORD DE TUYAU COMPRENANT UN TEL JOINT COMPOSITE

(30) Priority: 22.12.1987 NL 8703104
(43) Date of publication of application: 28.11.1990
(73) Proprietor: WAVIN B.V., NL-8031 EM Zwolle (NL)
(72) Inventor: VAN DONGEREN, Jan, Peter, NL-7691 BK Bergentheim (NL)
(74) Representative: van der Kloet-Dorleijn, Geertruida W.F., Drs.
(86) International application number: NL8800059
(87) International publication number: WO8905721

## Description

The invention relates to a method for manufacturing, by injection molding, a composite seal, in particular suitable for reception in an internal groove recess of a pipe part provided with a coupling, a retaining annular element being formed from a less elastic material and said retaining annular element being provided with one or more sealing parts of a more elastic material, use being made of a mold.

Such a method for manufacturing a composite seal is known from D-A-2.709.000.

According to said known method, the retaining element and the selaing part of the composite seal are formed from polymers having a different modulus of elasticity.

Because in this case the retaining element is formed in its entirety by injecting the relevant polymer in a hot-plastic state into a suitable molding cavity of a mold, the molding cavity being immediately completely injected in its entirety, intimate mixing with the already formed sealing part takes place in the surface region thereof, as a result of which the properties of the sealing part also vary as a result of the varying composition. In addition, said known composite seal is consequently not capable of being manufactured completely reproducibly, inter alia, as a consequence of the pressures used during the injection molding.

Although mixing of the elastic and non-elastic plastics can be eliminated by applying the non-elastic Plastic to the surface of the previously formed sealing parts with a low inject ion molding pressure, this results in a reduced adhesion of the sealing parts, a longer production time and additional costs.

The object of the invention is to eliminate the disadvantages of the known composite seal to be received in a pipe part.

The invention therefore relates to a method of the type mentioned in the introduction which is characterized in that one or more sealing parts are first formed from a more elastic plastic which is compatible with the less elastic plastic, therafter forming gradually the retaining element and joining said element physically and/or chemically to the sealing parts , providing at least one portion of the surface of the retaining element, which is not to be linked with sealing parts, with a film of the more elastic plastic during the step of gradually forming the retaining element by entrainment of superficially fluid, more elastic plastic and forming at the injection side of the retaining element at least one projection of the less elastic plastic in the vicinity of the insertion opening of a pipe part to be received.

Because the elastic sealing parts are situated at a distance from one another of at least the wall thickness of the retaining annular element and this is virtually the same over the entire length thereof, the rigidity of the retaining annular element is maintained because no elastic plastic of the sealing parts is present there in, while, owing to their homogeneity, the sealing parts, together with the retaining annular element, provide an optimum sealing function. In addition, a good joint is ensured between all the parts of the sealing ring.

It is pointed out that a composite seal is known from DE-B-1182913 which comprises a retaining annular element composed of a less elastic material which is joined, at least on the face end, with a sealing part which, on the one hand, can interact with the inside of the groove recess and, on the other hand, with the outside of an inserted pipe part. The retaining annular element and the sealing part of said known seal are manufactured from rubber having a different hardness and can be joined to each other by vulcanising. As a result of this, however, deformation takes place both of the retaining annular element and the sealing part, while the joint of the two parts is not uniform.

A composite seal is furthermore known from WO 86/00679 in which the first sealing part rests against the inside of the groove recess and has the form of a shoulder which is pressed in when the seal is introduced into the groove recess. With the exception of the lip-shaped part against which the inserted pipe part rests, the second sealing part is completely surrounded by non-elastic plastic.

Because said known seal is composed largely of a non-elastic plastic, the entity is fairly rigid, as a result of which a good sealing action cannot readily be obtained. To improve the sealing action, it is therefore preferable in said known seal to bring about the joint with the sealing chamber by welding or by applying an adhesive.

Apart from this, a composite seal from DE-U-7636342 is known in which the less elastic retaining body is completely received in the more elastic sealing part. The retaining body therefore acts as a seal. Such a construction has the result that, when pipe parts are pushed into each other and the deformation of the elastic material takes place to a greater or lesser extent, the seal will then have the tendency of emerging from the sealing chamber, as a result of which the sealing action is lost.

In order to eliminate such problems, a composite seal of the above type is also known from DE-A-2600153 in which the less elastic retaining body is provided on a face end thereof with a U-shaped end part which completely clasps the sealing part in the vicinity of said face end.

Such a seal is, however, not suitable for reception in an internal groove recess of a receiving pipe part.

Finally, a composite seal for joining a receiving and an inserted pipe part is known from DE-A-3510238 which is situated in a sealing recess of the receiving pipe part and is composed of an elastic body which, at the sealing chamber side, is provided with a groove for receiving not yet completely cured plastic. To obtain a good joint between the material of the elastic body and that with which the groove is filled, rubber is preferably used as elastic material and polyurethane as not completely cured plastic.

During the complete curing of the polyurethane present in the groove, the polyurethane will be mixed to some extent with the rubber and thus ensure a good joint.

The less elastic retaining body is in this case, however, completely surrounded by more elastic material, with the exception of the side facing the groove recess, and said retaining body is situated in the centre of the groove recess. The sides facing the insertion opening and facing away therefrom are therefore composed completely of elastic material.

According to the invention, the sealing parts are preferably formed from a thermoplastic elastomer, in particular an elastomer based on polyalkene or a rubber. Such a material ensures a good seal as a result of the flexibility or deformability thereof. A material which has proved particularly suitable is a thermoplastic rubber such as that which is marketed by Monsanto under the name Santoprene.

The additional rigidity required for the seal is obtained by the non-elastic plastic body.

The film of the more elastic plastic optionally formed on the retaining body is formed more particularly by entraining the more elastic plastic of the already formed sealing parts.

As has already been stated above, the formation of the retaining annular element takes place gradually. This is achieved, in particular, by carrying out the injection molding thereof in a manner such that the molding cavity present for the retaining annular element in the mold is gradually filled by controlled displacement of one of the wall parts.

By gradually making the molding cavity free, it is in fact prevented that inhomogeneities are produced by mixing of the thermoplastic materials used. The temperature of the plastic material used for the retaining element is, however, still so high that a physical and/or chemical bonding with the sealing parts already formed is ensured.

The invention furthermore relates to a pipe part provided with a coupling having an internal groove recess wherein a composite seal is received, being characterized in that said composite seal is obtained according to the method according to the invention and a part of the retaining element of said composite seal comprises a film formed by fluid, entrained from the surface material of the sealing parts thereof.

The invention will be explained in more detail by reference to the following exemplary embodiments with the aid of the drawing, wherein:
Figure 1 shows a cross section of a first embodiment of a pipe part provided with a composite seal according to the invention;
Figure 2 shows a cross section of another embodiment of a pipe part provided with a composite seal according to the invention;
Figure 3 shows a finished pipe joint with a composite seal according to Figure 2 and
Figure 4 shows a stage during the manufacture of a composite seal according to the invention.

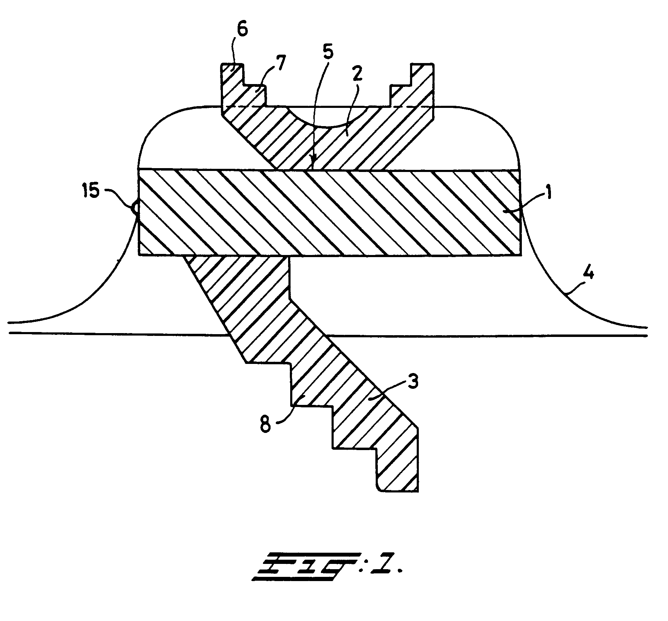

Figure 1 shows a pipe part provided with a composite seal composed of a retaining annular element of a less elastic plastic. The retaining annular element is provided with a sealing part 2 on the inside of the sealing recess. The retaining element is preferably formed from a thermoplastic material based on a polyalkene, such as polypropene.

The sealing part 2 is preferably composed of a thermoplastic elastomer such as a polystyrene- polyalkene-polystyrene rubber, the polyalkene section being an ethene-propene polymer, but obviously an ethene polymer or a propene polymer is also suitable. Such a thermoplastic rubber is manufactured by Monsanto and marketed under the name Santoprene.

The interface 5 between the retaining annular element 1 and the sealing part 2 is composed of thermoplastic material of the sealing part 2 and thermoplastic elastomer of the retaining annular element 1 fused with each other. These parts are thus physicochemically joined to each other.

In Figure 1, the sealing part 2 is located centrally on the retaining annular element 1 and therefore also centrally in the sealing recess 4. Such a location of the two components is, however, not required to obtain a good seal of a receiving and an inserted pipe part.

As is shown in Figure 1, the sealing part 2 is provided with ribs 6 and 7.

The sealing part 3 is also provided with one or more ribs 8. Said sealing part 3 is manufactured from the same material as is used for the sealing part 2.

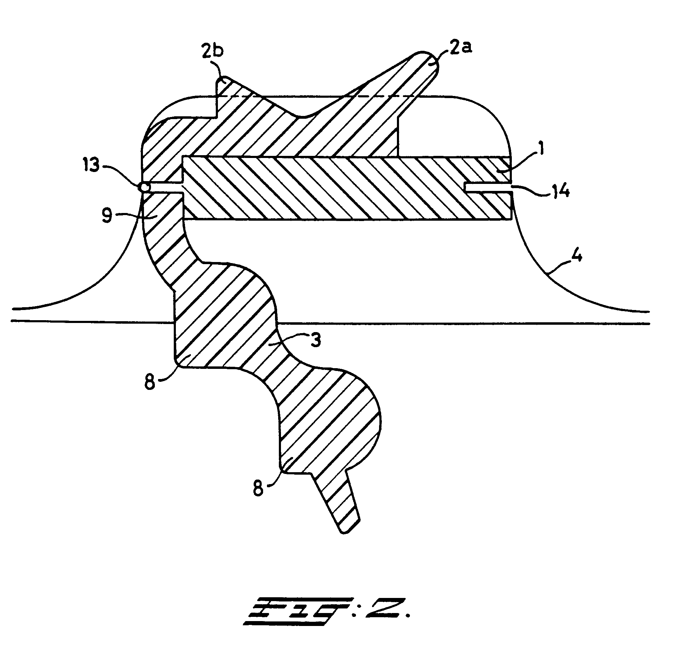

Figure 2 shows an exemplary embodiment of a composite seal for joining a receiving and inserted pipe part. The sealing part 2 is in this case constructed with two lips 2a and 2b. This embodiment differs, however, in particular from the embodiment shown in Figure 1 in that the sealing part 2 and the sealing part 3 are joined to each other via a joining part 9. This joining part 9 is therefore located on one of the two face sides of the retaining annular element. Since only one feed point is required to manufacture the sealing lips, this embodiment can be manufactured by a cheaper production method.

The shape of the composite seal according to the invention is not limited to the embodiments described above. Thus, within the scope of the invention, the shape and also the number of ribs on the elastic parts may be changed.

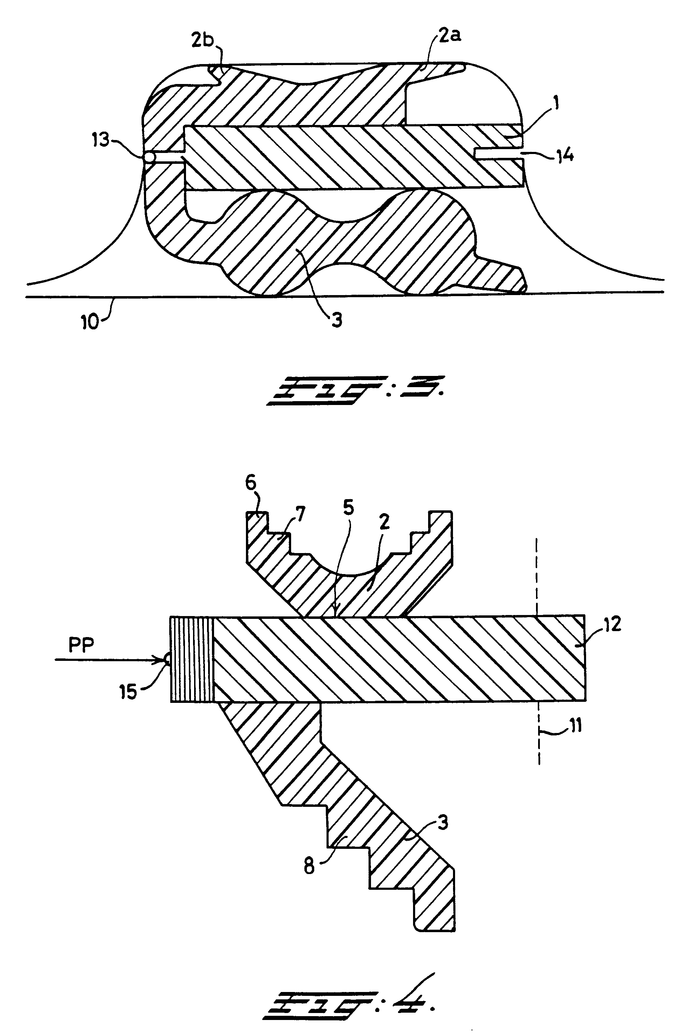

Figure 3 shows a finished pipe joint which is provided with a composite seal according to Figure 2. As is evident from Figure 3, the introduction of the inserted pipe part 10 both presses the lips 2a and 2b against the inside of the groove recess and the sealing part 3 against the retaining annular element 1. Because the sealing part 3, like the sealing part 2, is composed of a thermoplastic elastomer, such as the thermoplastic rubber marketed under the name Santoprene, these parts can easily be deformed on introducing the inserted pipe part and a particularly good sealing action can be ensured.

Figure 4 shows a stage of the injection molding of the retaining annular element 1. The sealing parts have in this case already been formed by completely injecting the corresponding mold cavities with a thermoplastic elastomer. Preferably, use is made of the thermoplastic elastomer marketed under the name Santoprene.

Another thermoplastic rubber may, however, also be used. In view of the application, a rubber is to be preferred in this case which has a Shore hardness of approximately 55A and which can be used at temperatures of approximately -50°C to approximately 100°C.

After the sealing parts have been formed, the retaining annular element 1 is formed in the same mold. During the injection molding of the retaining annular element of, preferably, polypropene, a still just liquid "plug" is first formed starting from the feed point 15. Then the tubular slider 12 is moved in a controlled manner to the right so that the initially formed "plug" moves to the right as a result of the movement of the slider and the feed point thereof builds up to form the retaining element. The formation of this polypropene "plug" is fairly essential because, during the controlled movement of the slider to the right, the polypropene plug slides over the material of the previously formed sealing parts 2 and 3. This prevents the material of the sealing parts being forced into the molding cavity between the polypropene plug and the slider and inhomogeneities being able to occur. In Figure 4, the portion past the broken line 11 corresponds to the polypropene plug initially formed at the feed point. This portion is the distance over which the tubular slider is moved to the right. It is pointed out that the polypropene plug remains liquid during the controlled withdrawal of the slider. During the formation of the retaining element, this plug of liquid polypropene entrains parts of the already formed sealing parts 2 and 3, but without affecting the sealing properties of the sealing elements.

By thus carrying out the injection molding gradually, one or more injection molding channels 13 (see Figures 2 and 3) are produced in the joining section 9 of the two sealing parts, while these channels appear at the other face side of the retaining element as channel-like openings 14. In the embodiment according to Figure 1, only one (or more than one) projection(s) such as 15 will be produced by the injection moulding.

Although the sealing parts in the above embodiments are formed from a thermoplastic elastomer such as the thermoplastic rubber marketed as Santoprene, other rubbers may obviously be used provided they have a favourable Shore hardness in addition to a service temperature range which is sufficiently wide.

## Claims

1. Method for manufacturing, by injection molding, a composite seal, in particular, suitable for reception in an internal groove recess (4) of a pipe part provided with a coupling, a retaining annular element (1) being formed by a less elastic material and said retaining annular element (1) being provided with one or more sealing parts (2, 3) of a more elastic material, use being made of one single mold, characterized in that one or more sealing parts (2, 3) are first formed, from a more elastic plastic which is compatible with the less elastic plastic, therafter forming gradually the retaining element (1) and joining said element (1) physically and/or chemically to the sealing parts (2, 3), providing at least one portion of the surface of the retaining element, which is not to be linked with sealing parts, with a film of the more elastic plastic during the step of gradually forming the retaining element by entrainment of superficially fluid, more elastic plastic and forming at the injection side of the retaining element at least one projection (15) of the less elastic plastic in the vicinity of the insertion opening of a pipe part to be received.

2. Method according to claim 1, characterized in that the sealing parts (2, 3) are formed from a thermoplastic elastomer, preferably an elastomer based on polyalkene, or a rubber.

3. Method according to claim 1 or 2, characterized in that the sealing parts (2, 3) are formed from a thermoplastic rubber.

4. Method according to claim 1-3, characterized in that the retaining annular element (1) is gradually formed by carrying out the injection molding thereof in a manner such that the molding cavity present for the retaining annular element (1) in the mold is gradually filled by controlled displacement of one of the wall parts.

5. Pipe part provided with a coupling having an internal groove recess (4) wherein a composite seal is received, characterized in that said composite seal is obtained according to the method according to claim 1-4 and a part of the retaining element of said composite seal comprises a film formed by fluid, entrained from the surface material of the sealing parts thereof.

## Patentansprüche

1. Verfahren zum Herstellen durch Spritzgießen einer zusammengesetzten Dichtung, insbesondere geeignet zur Aufnahme in einer inneren Nutausnehmung (4) eines mit einer Kupplung versehenen Rohrteils, bei dem ein ringförmiges Halteelement (1) von einem weniger elastischen Material gebildet und das ringförmige Halteelement (1) mit einem oder mehreren Dichtungsteilen (2,3) aus einem elastischeren Material versehen und wobei eine einzige Form verwendet wird, dadurch gekennzeichnet, daß zuerst ein oder mehrere Dichtungsteile (2,3) von einem elastischeren Kunststoff gebildet werden, der mit dem weniger elastischen Kunststoff kompatibel ist, danach allmählich das Halteelement (1) gebildet und dieses Element (1) stofflich und/oder chemisch mit den Dichtungsteilen (2,3) verbunden wird, zumindest ein Bereich der Oberfläche des Halteelements, der nicht mit Dichtungsteilen zu verbinden ist, mit einem Film des elastischeren Kunststoffes während des Schrittes des allmählichen Bildens des Halteelements durch Mitnahme von oberflächig flüssigem elastischerem Kunststoff versehen wird und an der Einspritzseite des Halteelements zumindest ein Vorsprung (15) des weniger elastischen Kunststoffes in der Nähe der Einstecköffnung eines aufzunehmenden Rohrteils gebildet wird.

2. Verfahren nach Anspruch 1, dadurch gekennzeichnet, daß die Dichtungsteile (2,3) aus einem thermoplastischen Elastomeren, vorzugsweise einem Elastomeren auf der Basis von Polyalken, oder einem Kautschuk gebildet werden.

3. Verfahren nach Anspruch 1 oder 2, dadurch gekennzeichnet, daß die Dichtungsteile (2,3) von einem thermoplastischen Kautschuk gebildet werden.

4. Verfahren nach Anspruch 1 bis 3, dadurch gekennzeichnet, daß das ringförmige Halteelement (1) allmählich gebildet wird, indem sein Spritzgießen in der Weise durchgeführt wird, daß der für das ringförmige Halteelement (1) in der Form vorhandene Formhohlraum allmählich durch kontrollierte Verlagerung eines der Wandteile gefüllt wird.

5. Mit einer Kupplung versehenes Rohrteil mit einer inneren Nutausnehmung (4), in der eine zusammengesetzte Dichtung aufgenommen ist, dadurch gekennzeichnet, daß die zusammengesetzte Dichtung gemäß dem Verfahren nach den Ansprüchen 1 bis 4 erhalten ist und ein Teil des Halteelements der zusammengesetzten Dichtung einen Film umfaßt, der von vom Oberflächenmaterial der Dichtungsteile mitgenommener Flüssigkeit gebildet ist.

## Revendications

1. Procédé de fabrication, par moulage par injection, d'un joint composite, en particulier, apte à être reçu dans un évidement formant rainure interne (4) d'une partie de tuyau dotée d'un accouplement, un élément annulaire de retenue (1) étant constitué par une matière moins élastique et ledit élément annulaire de retenue (1) étant doté d'une ou de plusieurs parties d'étanchéité (2, 3) constituées par une matière plus élastique, un seul moule étant utilisé, caractérisé en ce que une ou plusieurs parties d'étanchéité (2, 3) est/sont formée(s) d'abord à partir d'une matière plastique plus élastique qui est compatible avec la matière plastique moins élastique, l'élément de retenue (1) est formé progressivement, et ledit élément (1) est uni physiquement et/ou chimiquement aux parties d'étanchéité (2, 3), au moins une partie de la surface de l'élément de retenue, qui ne doit pas être unie aux parties d'étanchéité, est dotée d'un film constitué par la matière plastique plus élastique au cours de l'étape consistant à former progressivement l'élément de retenue par entraînement de matière plus élastique et superficiellement fluide et au moins une protubérance (15) de la matière plastique moins élastique est formée au niveau du côté injection de l'élément de retenue, au voisinage de l'ouverture d'insertion d'une partie de tuyau à recevoir.

2. Procédé selon la revendication 1, caractérisé en ce que les parties d'étanchéité (2,3) sont formées à partir d'un élastomère thermoplastique, de préférence un élastomère à base de polyalkylène, ou d'un caoutchouc.

3. Procédé selon la revendication 1 ou 2, caractérisé en ce que les parties d'étanchéité (2, 3) sont formées à partir d'un caoutchouc thermoplastique.

4. Procédé selon les revendications 1 à 3, caractérisé en ce que l'élément annulaire de retenue (1) est formé progressivement en réalisant le moulage par injection de celui-ci de telle sorte que la cavité de moulage prévue pour l'élément annulaire de retenue (1) du moule est remplie progressivement grâce au déplacement contrôlé de l'une des parties de paroi.

5. Partie de tuyau dotée d'un accouplement ayant un évidement formant rainure interne (4) dans lequel est reçu un joint composite, caractérisée en ce que ledit joint composite est obtenu conformément au procédé selon les revendications 1 à 4 et une partie de l'élément de retenue dudit joint composite comporte un film formé par du fluide, entraîné de la matière de surface de ses parties d'étanchéité.
